Europäisches Patentamt

European Patent Office

Office européen des brevets

(19)

(11) **EP 1 376 909 A1**

(12) # EUROPEAN PATENT APPLICATION

(43) Date of publication:
**02.01.2004 Bulletin 2004/01**

(51) Int Cl.7: **H04B 10/18**, G02B 6/34

(21) Application number: **02014427.5**

(22) Date of filing: **28.06.2002**

| | |
|---|---|
| (84) Designated Contracting States:<br>**AT BE CH CY DE DK ES FI FR GB GR IE IT LI LU MC NL PT SE TR**<br>Designated Extension States:<br>**AL LT LV MK RO SI**<br><br>(71) Applicant: **Adaptif Photonics GmbH**<br>**21079 Hamburg (DE)** | (72) Inventors:<br>• **Rosenfeldt, Harald, Dipl.-Ing.**<br>**20251 Hamburg (DE)**<br>• **Stolte, Ralf, Dr.**<br>**21147 Hamburg (DE)**<br><br>(74) Representative: **Eisenführ, Speiser & Partner**<br>**Patentanwälte Rechtsanwälte**<br>**Zippelhaus 5**<br>**20457 Hamburg (DE)** |

(54) **Optical signal distortion mitigator with accelerated response time**

(57)     The present invention relates to adaptive optical signal distortion mitigators and in particular to compensators for chromatic dispersion and polarization mode dispersion. Response time of a given compensator is improved by inserting a fast control element which either has a reduced tuning range or is used for more than one optical WDM channel simultaneously.

Fig. 5

## Description

FIELD OF THE INVENTION

The present invention relates generally to signal distortion mitigation, in particular to optical signal distortion mitigation, e.g. in optical fiber communication systems, and more particular to adaptive compensation of dispersive effects on optical signals such as polarization mode dispersion or chromatic dispersion.

BACKGROUND OF THE INVENTION

During the last 10 years a tremendous growth has been seen in the application of fiber optic solutions to telecommunications and data communications. For applications requiring either high speeds or long distances, fiber optics now dominates all other technologies. The ongoing growth in bandwidth demand supports the trend of further increasing the per-channel bit rate in deployed networks. State-of-the-art communication systems use channel bit rates as high as 10 Gbit/s or 40 Gbit/s. At these bit rates, fiber properties are critically influencing the quality of the transmitted signal and thus have great impact on the bit error rate (BER) of the link. Two important fiber properties are chromatic dispersion (CD) and polarization mode dispersion (PMD).

SUMMARY OF THE INVENTION

It is an object of the present invention to provide improved mitigation of signal distortion.
The object is solved by the independent claims.
Distortion caused by CD can be compensated by passive optical components such as dispersion compensating fiber (DCF) or chirped fiber Bragg gratings (FBG) which can apply a fixed CD of same magnitude but opposite sign. This can remove the CD-induced signal impairments to some extend and can increase the maximum transmission distance. However, this approach cannot compensate for time-variant changes of the fiber CD, possibly induced by changing environmental conditions.
As a consequence of the reduced dispersion tolerance of future high-speed communication systems the need for solutions able to adaptively follow the environmental changes arises. These solutions can comprise a tunable CD element which is dynamically controlled to match the fiber dispersion with an opposite sign.
As opposed to impairments induced by CD impairments induced by PMD can more or less solely be compensated by an adaptive optical system since this effect is highly time variant and can change on a millisecond time scale. Ellipticity of the fiber core, as well as mechanical stress, caused for example by fiber bendings, creates propagation constants which are dependent on the signal polarization. An arbitrary polarized signal thus decomposes into two orthogonally polarized components traveling at different speeds. The polarization states of these two signals are commonly referred to as principal states of polarization (PSP), i.e. slow PSP and fast PSP. The delay between the two components is referred to as differential group delay (DGD). The influence of PMD on an optical signal is quite comparable to the phenomenon of multi-path propagation and causes similar distortions such as inter-symbol interference.

A PMD compensator should select the fast fraction of the signal, i.e. the fast PSP, and apply a delay equal to the DGD. This should cause the fast signal to be realigned with the slower traveling signal and can remove the PMD-induced distortions. One possible approach is to use a fixed or tunable DGD element (also having slow and fast PSPs) in conjunction with a polarization controller between the DGD element and the fiber link. The polarization controller should be adjusted in a way that the fast PSP of the fiber link is aligned to the slow PSP of the DGD element and vice versa. In case of a tunable DGD element, the DGD should be adjusted matching the DGD of the fiber link.

The common part in both applications, adaptive CD compensation and adaptive PMD compensation, is that the control elements (either tunable CD element, polarization controller or tunable DGD element) can have certain control parameters which should be adjusted according to the instantaneous occurring signal distortion. An approach could be a gradient search method or feedback method. The basic principle of this method is to continuously observe the changing signal quality as the control parameters are slightly modified, which can be described by the term 'parameter dithering'. This can allow the calculation of the gradient of the signal quality with respect to the control parameters and can give a rule how the current control parameters have to be modified in order to optimize the bit error rate.

One insufficiency of parameter dithering is that the speed of the control elements has to be higher than the desired response time of the whole compensator would imply. This is because a gradient search algorithm used for parameter dithering preferably approaches the global optimum in a number of steps. For each step the gradient should be measured which can require one or more dithering periods. Given a desired response time $t_{total}$ of the compensator the dithering frequency $f_{dither}$ of the control parameters should be significantly higher than $1/t_{total}$. Therefore, the response time $t_{control}$ of the control elements should be significantly shorter (preferably at least an order of magnitude) than the desired overall response time of the compensator. If the response time of the control elements is predefined by the chosen technology, the latter circumstances define an upper boundary for the achievable compensator speed when using parameter dithering.

As described in the last paragraph, response time of control elements can impact overall response time of an adaptive compensating system and thus can define an upper boundary for the compensating speed. However, the present invention can increase this boundary. by using the subject matters described in the independent claims.

Price considerations can make a modification of the control elements in order to increase overall speed of a compensating system an undesirable approach, because faster technologies are typically more expensive. Furthermore, faster control elements can be limited in tuning range. It is thus preferred to improve compensating speed without replacing the control elements.

According to an embodiment of the present invention described below it is preferred to separate the task of optimizing the control parameters and the task of acquiring the instantaneous gradient. Therefore, it is avoided the need to perform both tasks by the same control elements by dithering each control parameter.

According to another embodiment of the present invention performance of the invention can be improved by amending the original compensating system by fast control elements more or less solely responsible for performing the dithering operation while the slower control elements can be used more or less solely for the actual control task. Due to the faster dithering operation, it is possible to acquire information on the gradient with a higher repetition rate which improves the overall compensating speed.

These embodiments of the present invention improve the speed of the dithering process in order to improve total response time of a control setup. According to this these embodiments the additional fast control elements are inserted into the optical path nearly solely responsible for the dithering operation while the slow control elements are still used for the control task as in the prior art. This scheme is advantageous in the following cases:

i. The fast control elements have a limited tuning range and thus are not suitable for performing the control task itself.

ii. The fast control elements could generally perform the control task but are significantly more expensive than the slow control elements. In an N-channel WDM system one single fast control element can manipulate all N channels simultaneously while the control task is still processed for each channel individually by N control elements.

iii. iii. A mixture of both cases.

Other preferred embodiments of the present invention are shown by the dependent claims.

It is clear that the invention can be partly embodied or supported by one or more suitable software programs, which can be stored on or otherwise provided by any kind of data carrier, and which might be executed in or by any suitable data processing unit.

BRIEF DESCRIPTION OF THE DRAWINGS

Other objects and many of the attendant advantages of the present invention will be readily appreciated and become better understood by reference to the following detailed description when considering in connection with the accompanied drawings. The components in the drawings are not necessarily to scale, emphasis instead being placed upon clearly illustrating the principals of the present invention. Features that are substantially or functionally equal or similar will be referred to with a same reference sign(s).

Fig. 1 (a)  shows a first prior art control circuit;

Fig. 1 (b)  shows a second prior art control circuit comprising a controller for stabilizing output power;

Fig. 1 (c)  shows a third prior art control circuit comprising a controller for maximizing output power transmitted through an optical band pass filter;

Fig. 2(a)  shows a variable retarder as control element inside an optical path to be used in an embodiment of the present invention;

Fig. 2(b)  shows a cascade according to an embodiment of the present invention;

Fig. 2(c)  shows a cascade according to an embodiment of the present invention;

Fig. 2(d)  shows a cascade according to an embodiment of the present invention;

Fig. 3(a)  shows a cascade of the prior art;

Fig. 3(b)  shows a cascaded cascade or PC according to an embodiment of the present invention;

Fig. 4(a)  shows a cascade of a slow tunable DGD element and a fast tunable DGD element according to an embodiment of the present invention;

Fig. 4(b)  shows a cascade of a slow tunable CD element and a fast tunable CD element according to an embodiment of the present invention;

Fig. 5  shows a control setup compensator according to an embodiment of the present invention; and

Fig. 6 shows an example of a PMD compensator according to an embodiment of the present invention.

## DETAILED DESCRIPTION OF THE INVENTION

First of all, in the following it is given a summary of the content of each figure of the attached drawings.

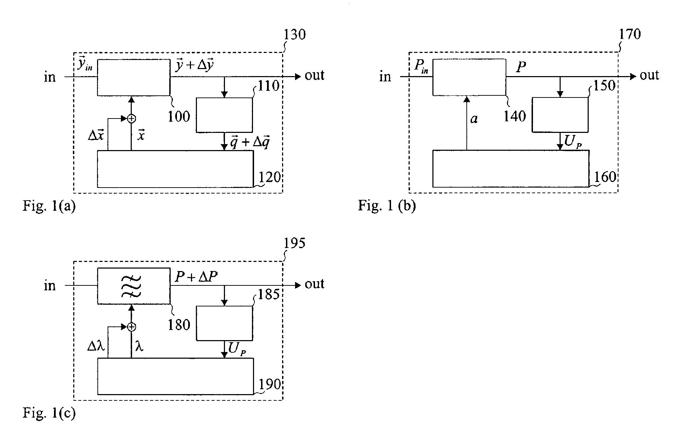

Fig. 1(a) shows a first prior art control circuit 130. The performance is monitored at an output 110 while the control parameters are dithered around their instantaneous state. A controller 120 uses this information to calculate improved control parameters $\vec{x}$. In the present application this concept is referred to as feedback control. Fig. 1 (b) shows a second prior art control circuit 170 comprising a controller 160 for stabilizing output power P. The controller 160 uses a readout of a power detector 150 to adjust a variable optical attenuator 140. Fig. 1(c) shows a third prior art control circuit 195 comprising a controller 190 for maximizing output power transmitted through an optical band pass filter 180 the center wavelength of which is tunable. The controller 190 observes the readout of a power detector 185 while the center wavelength of the band pass filter is dithered to derive a modified center wavelength.

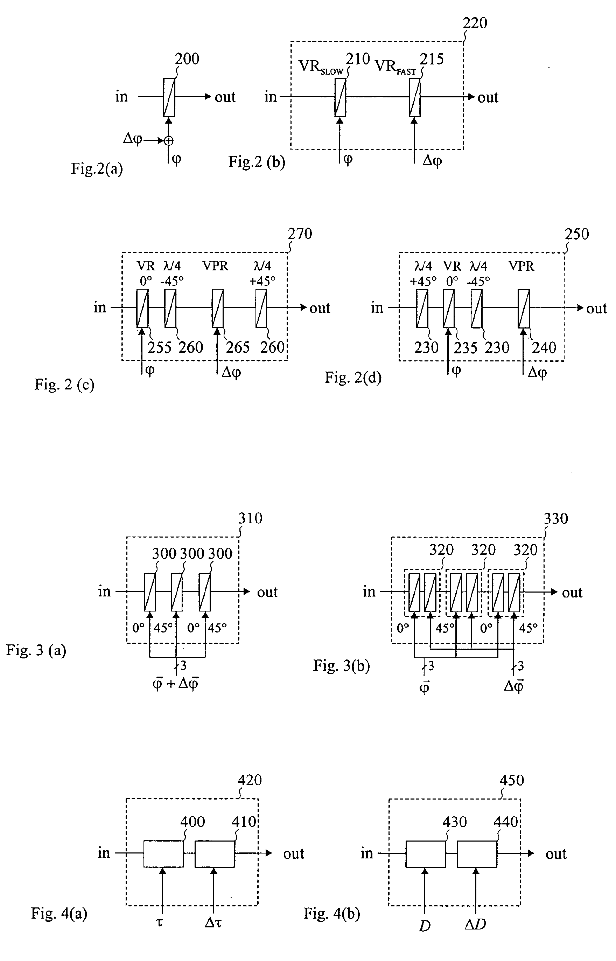

Fig. 2(a) shows a variable retarder 200 as control element inside an optical path to be used in an embodiment of the present invention. Dithering can be done by changing the retardation $\varphi$ of the retarder 200 by a small amount $\Delta\varphi$. Fig. 2(b) shows a cascade 220 according to an embodiment of the present invention. The cascade 220 comprises a slow variable retarder 210 and a fast variable retarder. The fast retarder can be used for a dithering operation. Fig. 2(c) shows a cascade 270 according to an embodiment of the present invention. The cascade 270 comprises a a slow retarder 255 and a fast polarization rotator 265. Quarter-wave plates 260 are used to transform the birefringent axes of the polarization rotator 265 into linear birefringent axes. Fig. 2(d) shows a cascade 250 according to an embodiment of the present invention. The cascade 250 comprises a slow retarder 235 and a fast polarization rotator 240. Quarter-wave plates 230 are used to transform the birefringent axes of the slow retarder 235 into circular birefringent axes.

Fig. 3(a) shows a cascade 310 of the prior art. The cascade 310 comprises three variable linear retarders 300. Fig. 3(b) shows a cascaded cascade or PC 330 according to an embodiment of the present invention. The PC 330 comprises three cascades 320 each comprising cascaded fast and slow variable retarders 210 and 215 according Fig. 2(b) or 255 and 265 according Fig. 2(c) or 235 and 240 according to Fig. 2(d).

Fig. 4(a) shows a cascade 420 of a slow tunable DGD element 400 and a fast tunable DGD element 410 according to an embodiment of the present invention.

tion. The fast tunable DGD element 410 can be used for a dithering operation while the slow tunable DGD element 400 can be used for influencing the DGD of the optical signal. Fig. 4(b) shows a cascade 450 of a slow tunable CD element 430 and a fast tunable CD element 440. The fast tunable CD element 440 can be used for the dithering operation while the slow tunable CD element 430 can be used for influencing the CD of the optical signal.

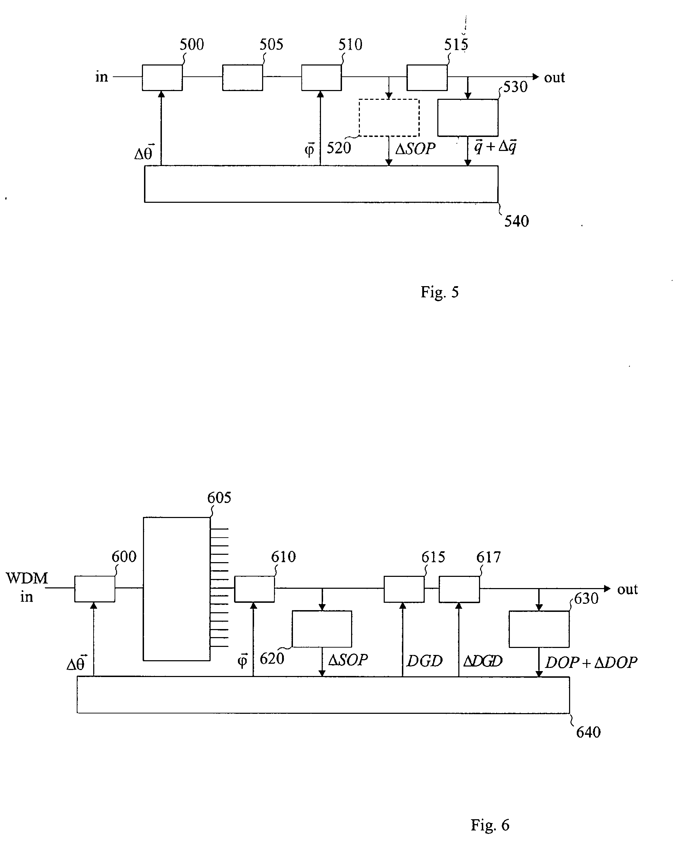

Fig. 5 shows a control setup compensator according to an embodiment of the present invention comprising a fast PC 500 and a slow PC 510. A controller 540 monitors signal quality and optional the SOP after the slow PC 510 while the SOP is dithered by means of the fast PC 500. Based on these information new control parameters $\vec{\varphi}$ for the slow PC 510 are derived.

Fig. 6 shows an example of a PMD compensator according to an embodiment of the present invention. In the depicted PMD compensator a fast PC 600 is dithering SOP of all WDM channels simultaneously. A DOP gradient with respect to the SOP can be measured by a DOP monitor 630 at the output "out". The control task itself is performed by a slow PC 610 for each channel individually. Since the control voltages of the fast 600 and the slow PC 610 do not necessarily have the same impact on the SOP, an optional polarimeter 620 helps to calculate the necessary changes to the control parameters of the slow PC 610. A slow tunable DGD element 615 compensates for the accumulated PMD of the signal. Dithering of the DGD is performed by an additional fast tunable DGD element 617.

With the help of Fig. 1 in the following it is described in more detail a possible concept to mitigate signal distortions according to the prior art. In the prior art an approach to mitigate signal distortions is to apply a filter with a behavior complementary to the distorting characteristic. Time variant distortions create the need for tunable filters which can be adjusted according to the instantaneous occurring distortion level. Optical filters may include all-pass filters manipulating optical phase properties such as CD as well as signal polarization (SOP, state of polarization) or DGD. Other filters can manipulate optical power levels or spectral amplitude. In the following, these optical filter setups are referred to as optical equalizers.

Fig. 1(a) shows a prior art control circuit 130. Given an optical equalizer 100, the question arises how to adjust parameters of control elements of equalizer 100 to achieve optimum performance. A possible concept is to control the equalizer 100 in a feed-back loop 130 according to Fig. 1 (a). A feed-back loop 130 comprises a signal monitor 110 at an equalizer output "out" of the equalizer 100 measuring a specific physical property $\vec{y}$ of the signal such as SOP, DOP, power level, BER etc. and producing a readout $\vec{q}$. A feed-back controller 120 changes the control parameters $\vec{x}$ of the equalizer 100 in order to optimize the monitored signal. In this concept, all $\vec{x}$, $\vec{y}$ and $\vec{q}$ are vectors comprising at least one scalar value. In some cases, the readout of the signal monitor 110 allows to derive directly the control signal for the equalizer 100.

An example may be given by the stabilization of an optical power level P (see Fig. 1(b)). In that case, a signal equalizer 140 is a variable optical attenuator (VOA) and a signal monitor is an averaging optical power detector 150. If the instantaneous output power level P is higher than the desired value $P_0$ (corresponding to the readout $U_{P0}$) attenuation $\alpha$ has to be increased, otherwise the attenuation has to be decreased. A so-called P-controller 160 can be used to adjust the attenuator 140: $\alpha = k_p \cdot (U_P - U_{P0})$. Control behavior can be adjusted using the parameter $k_p$.

In many applications, a readout of a quality monitor has to be either maximized or minimized. In these applications, the control signal cannot be calculated directly from the monitor readout since the optimum monitor signal is unknown. The controller needs the derivative of the monitor signal with respect to the control parameter to derive the control signal:

$$\left.\frac{d\vec{q}}{d\vec{x}}\right|_{\vec{x}=\vec{x}_0}.$$

An example may be given by a controller 195 according to Fig. 1(c) showing a tunable band pass filter 180 the center wavelength $\lambda$ of which has to be locked onto an optical signal (see Fig. 1 c). The control task of a controller 190 is thus to maximize the output power behind the filter 180. A straight-forward rule for such a discrete controller 190 is given by

$$\lambda_{i+1} = \lambda_i + k_P \frac{dU_P}{d\lambda_i}.$$

As long as the derivative

$$\frac{dU_P}{d\lambda_i}$$

is positive and unequal to zero, the center wavelength $\lambda$ increases, if it is negative, $\lambda$ decreases. After some iterations, $\lambda$ will approach the optimum value. In a practical system the value of

$$\frac{dU_P}{d\lambda_i}$$

has to be measured by slightly increasing $\lambda$ by $\Delta\lambda$ while observing readout $U_P$ of the power detector 185 and measuring $\Delta U_P$. The derivative can then be approximated by

$$\frac{\Delta U_P}{\Delta\lambda}$$

In this concept, the control parameter $\lambda$ has to be changed to derive a control signal. In many applications, the control parameter(s) are continuously moved back and forth to continuously calculate the derivative with respect to the control parameter(s). This process can therefore be called dithering. However, in the following the term dithering is used synonymously to a changing the control parameters $\vec{x}$ by a small value in order to acquire information about the derivative

$$\frac{d\vec{q}}{d\vec{x}}$$

of the monitor signal.

Maximum response time, i.e. the time needed to approach the optimum, is not only given by the number of required iterations, but also by the maximum dithering speed. If, for example, the maximum dithering speed is 100 Hz, the derivative could be measured every 10 ms. If 100 iterations are necessary to find the optimum control parameters, the total response time of the controller would be 1000 ms. Hence, accelerating the dithering process directly improves the total response time of the controller.

It follows a more detailed description of the embodiments of the present invention according to Fig. 2-6.

Fig. 2 illustrates an example of the present invention for the above mentioned case i). Fig. 2(a) depicts a variable retarder 200 acting as a tunable waveplate. Retarder 200 is made of nematic liquid crystal cells having a response time of approximately 100 ms. In the feed-back setup of Fig. 2(a), control task and dithering is performed with the same retarder. Fig. 2(b) shows an additional fast control element embodied by a fast variable retarder (VR$_{FAST}$) 215 having the same birefringent axes as a slow retarder (VR$_{SLOW}$) 210. Total retardation is given by the sum of retardation of both retarders 210, 215. A fast dithering signal ($\Delta\phi$) is applied to the fast retarder 215 while the slower control signal ($\phi$) is applied to the slow retarder 210. A practical implementation is shown by system 270 in Fig. 2(c). Here, a fast control element is given by a variable polarization rotator 265, preferably based on the magneto-optic (Faraday) effect. Circular birefringent axes of the polarization rotator 265 are converted into linear birefringent axes by means of quarter-wave plates 260. The total system 270 has linear birefringent axes and can be operated in the same way as the device 220 shown in Fig. 2(b). Alternatively, the linear birefringent axes of a slow retarder 255 can be converted into circular birefringent axes as it is shown in Fig. 2(d). The total system 250 of Fig. 2(d) has circular birefringent axes.

In the afore mentioned embodiments 220, 270, 250, the fast control element 215, 265, 240 affects the optical signal in the same way as the slow control element 210,255,235 does. Hence, a more straight-forward solution would be to replace the slow control element 210, 255, 235 completely by the fast one 215, 265, 240. However, in some cases, the tuning range of the fast control element 215, 265, 240 may be physically limited, e.g. in the case of the variable Faraday rotator. Hence, in such cases the fast control element 215,265,240 is not preferred for performing the control task itself.

For PMD compensation, it is preferred to transform the SOP of an optical signal into any desired polarization state. In this application devices providing this transformation are referred to as polarization controller (PC). A cascade of at least three variable linear retarders 300 as shown in Fig. 3(a) is capable of transforming any input SOP into any desired output SOP. The birefringent axes of the retarders 300 are preferably oriented alternating 0° and 45°. The four control parameters have been consolidated to a vector-type control parameter $\vec{\varphi}$. Each retarder 300 can be replaced by the devices 220, 270 depicted in

Fig. 2(b) or Fig. 2(c) to increase dithering speed. Such a polarization controller 330 is illustrated in Fig. 3(b). The SOP can be dithered using vector parameter $\Delta\vec{\varphi}$.

In the latter description, embodiments of the present invention have been shown using the retardation as control parameter which influences the signal SOP. Other embodiments use other control parameters such as DGD or CD. Fig. 4(a) shows a device 420 comprising a slow 400 and a fast 410 variable DGD element. Dithering can be performed with the fast element 410 since its DGD adds to the DGD of the slow element 400. The same approach can be used with elements having a tunable amount of CD according to Fig. 4(b). Also, in the embodiment of Fig. 4(b), the combination of a fast 440 and a slow 430 control element leads to faster dithering operation.

In the latter embodiments 420, 450 the additional fast control elements 410, 440 influence the optical signal "out" exactly in the same way as the slow control elements 400, 430. That is, applying a control parameter $\vec{x}$ and $\Delta\vec{x}$ to the slow 400, 430 and fast 410, 440 control element respectively generates the same output as applying a control parameter $\vec{x} + \Delta\vec{x}$ to the slow control element 400,430 alone. This is because the control elements 400,430; 410,440 where cascaded in a way that their effects added up.

However, it is only necessary that both control elements 400,430; 410,440 influence the same optical parameter, e.g. the SOP. Accordingly, Fig. 5 depicts a possible embodiment. The setup comprises a fast PC 500 which can be dithered by a controller 540 and which is capable of quickly changing the SOP of the optical signal. The optical signal may pass an optional arbitrary optical system 505 such as an optical fiber or a WDM demultiplexer which may transform the signal SOP before a slow PC 510 modifies the SOP again. The signal is modified after passing an additional optional optical system 515 such as a fixed or variable DGD element. If the controller 540 applies a change $\Delta\vec{\theta}$ to the fast PC 510, the change $\Delta\vec{q}$ of the monitor signal can be observed. Applying the same parameter change to the slow PC 500 does not necessarily cause the same change of the SOP. However, if the controller 540 knows the properties of the slow PC 500, i.e. its polarization transfer matrix as a function of the control parameters, it can calculate the required changes of the control parameter $\vec{\varphi}$. Measuring the SOP after the slow PC 500 by means of a polarimeter 520 can support this calculation.

Fig. 6 shows an embodiment of a PMD compensator according to the invention. Prior art concepts of PMD compensation are only capable of compensating the PMD within a limited bandwidth. As a consequence, each channel in a WDM system has to be compensated individually. Therefore, the prior art approach is to demultiplex the WDM signal and to apply a PMD compensator for each wavelength. Since the number of required PMD compensators increases with the channel count, it is advantageous to use slow, low-cost components in these per-channel compensators.

According to an embodiment of the invention a fast control element can be added to a prior art setup in order to accelerate response time. In Fig. 6, a fast PC 600 is inserted before the WDM signal is demultiplexed by a demultiplexer 605. Thus, quick SOP changes for the dithering operation can be induced for all WDM channels simultaneously. This fast PC 600 can for example be based on Lithium-Niobate technology or on the magneto-optic (Faraday) effect. The cost for this device 600 is distributed over the number of channels since it is only required once for a WDM system. The compensation task itself is done by the slower PC 610 (possibly based on liquid crystals) for each channel individually. An optional polarimeter (620) measures the SOP after the slow PC 610 which simplifies the calculation of the changes of control parameters $\vec{\varphi}$ from the measured monitor signal by a DOP monitor 630. The DOP, measured for example by a polarimeter 620 is used to detect signal quality. To compensate for the accumulated fiber PMD, a variable DGD element 615 is inserted into the optical path. If also the response time of the DGD control is to be improved, an additional fast tunable DGD element 617 can be inserted which is responsible for the DGD dithering. It is advantageous if the fast DGD element 617 has improved response time but a reduced tuning range compared to the slow DGD element 615.

**Claims**

1. A method of mitigating a distortion of an optical signal, comprising the steps of:

a) influencing a property of an optical signal on the basis of at least one control parameter by modifying at least one control parameter of a first control element,

b) monitoring the property of the influenced signal to derive a gradient of the property with respect to at least one control parameter,

c) specifically modifying a control parameter of a second control element to influence the signal on the basis of at least one control parameter derived from the derived gradient by using a second control element.

d) Repeating steps a) to c) to find a global optimum indicated by the repeatedly derived gradient.

2. The method of claim 1,
using the first control element to response to fast distortions of the signal.

3. The method of claim 1 or any one of the above claims,
using the second control element to response to slow distortions of the signal.

4. The method of claim 1 or any one of the above claims,
wherein the property is at least one of the following: BER, CD, DGD, PMD, SOP, DOP, power level.

5. A software program or product, preferably stored on a data carrier, for executing the method of one of the claims 1 to 4 when run on a data processing system such as a computer.

6. An apparatus for mitigating a distortion of an optical signal, comprising:

a first control element (500) for influencing a property of an optical signal on the basis of at least one control parameter,

a monitor (530) monitoring the property of the influenced signal to derive a gradient of the property with respect to the at least one control parameter,

a controller (540) for specifically modifying a control parameter of a second control element (510) to influence the signal on the basis of at least one control parameter derived from the gradient.

7. The apparatus of claim 6,
wherein the first control element (500) is dedicated to response to fast distortions of the signal.

8. The apparatus of claim 6 or 7,
wherein the second control element (510) is dedicated to response to slow distortions of the signal.

9. The apparatus of claim 6 or any one of the above claims 7 or 8,
wherein the first control element (500) is faster than the second control element (510).

10. The apparatus of claim 6 or any one of the above claims 7-9,
wherein at least one of the first and second control elements (500, 510) comprises at least one of the following: a variable retarder (210, 215, 255, 235), a quarter-wave plate (260, 230), a polarization rotator (265, 240), a DGD element (400,410), a CD element (430,440), a PC (500, 510,600, 610).

11. The apparatus of claim 6 or any one of the above claims 7-10,
comprising a n-channel WDM-demultiplexer (605) between the first (500) and the second (510) control element.

12. The apparatus of claim 11,
comprising a second control element (510) for each channel of the WDM (605).

13. The apparatus of claim 6 or any one of the above claims 7-12,
wherein at least one of the first and second control elements (500, 510) comprises a PC (500, 510, 600, 610) which comprises at least one of the following: a Lithium Niobat PC, a magneto-optical PC, a Liquid Crystal PC, a thermo-optical PC, a fiber-squeezer-type PC.

14. The apparatus of claim 6 or any one of the above claims 7-13,
wherein the property is at least one of the following: BER, CD, DGD, PMD, SOP, DOP, power level.

15. The apparatus of claim 6 or any one of the above claims 7-14,
wherein the first control element (500) is faster than the second control element (510).

Fig. 1(a)

Fig. 1 (b)

Fig. 1(c)

Fig.2(a)

Fig.2 (b)

Fig. 2 (c)

Fig. 2(d)

Fig. 3 (a)

Fig. 3(b)

Fig. 4(a)

Fig. 4(b)

Fig. 5

Fig. 6

**European Patent Office**

## EUROPEAN SEARCH REPORT

Application Number

EP 02 01 4427

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 01 61889 A (WHITING MATTHEW S ;CORNING INC (US); SOBISKI DONALD J (US)) 23 August 2001 (2001-08-23) | 1-10, 13-15 | H04B10/18 G02B6/34 |
| Y | * page 8, line 25 - page 9, line 1 * * page 9, line 9 - line 11 * * page 9, line 19 - line 20 * * page 16, line 15 - line 17 * * page 18, line 22 - line 25 * * figures 3,5 * | 11,12 | |
| Y | US 2002/018267 A1 (TAO JUN ET AL) 14 February 2002 (2002-02-14) * figure 5 * | 11,12 | |
| E | EP 1 251 647 A (NORTEL NETWORKS LTD) 23 October 2002 (2002-10-23) * paragraphs [0029],[0039],[0040],[0055],[0063],[0082], [0102],[0109],[0110],[0126]; figure 8 * | 1,10, 13-15 | |

TECHNICAL FIELDS SEARCHED (Int.Cl.7)

H04B
G02B

The present search report has been drawn up for all claims

| Place of search | Date of completion of the search | Examiner |
|---|---|---|
| THE HAGUE | 6 January 2003 | Cochet, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 02 01 4427

This annex lists the patent family members relating to the patent documents cited in the above-mentioned European search report.
The members are as contained in the European Patent Office EDP file on
The European Patent Office is in no way liable for these particulars which are merely given for the purpose of information.

06-01-2003

| Patent document cited in search report | | Publication date | Patent family member(s) | | Publication date |
|---|---|---|---|---|---|
| WO 0161889 | A | 23-08-2001 | AU | 6098701 A | 27-08-2001 |
| | | | AU | 6290901 A | 27-08-2001 |
| | | | WO | 0161888 A2 | 23-08-2001 |
| | | | WO | 0161889 A2 | 23-08-2001 |
| | | | US | 6487352 B1 | 26-11-2002 |
| | | | AU | 6295001 A | 17-12-2001 |
| | | | WO | 0195528 A2 | 13-12-2001 |
| | | | US | 2002064329 A1 | 30-05-2002 |
| US 2002018267 | A1 | 14-02-2002 | NONE | | |
| EP 1251647 | A | 23-10-2002 | US | 2002159672 A1 | 31-10-2002 |
| | | | EP | 1251647 A1 | 23-10-2002 |